# EUROPÄISCHE PATENTANMELDUNG

(11) **EP 4 654 606 A2**
(43) Veröffentlichungstag der Anmeldung: **26.11.2025**
(21) Anmeldenummer: 25207092.5
(22) Anmeldetag: 24.03.2022
(51) Int. Cl.: H04Q 11/06

(54) **KOMMUNIKATIONSVERFAHREN IN EINEM NETWORK-ON-CHIP**

(30) Priorität: 25.03.2021 DE 102021107484
(62) Teilanmeldung aus: 22164166.5
(71) Anmelder: Airbus Defence and Space GmbH, 82024 Taufkirchen (DE)
(72) Erfinder: Uhrig, Sascha, 82024 Taufkirchen (DE); Freitag, Johannes, 82024 Taufkirchen (DE)
(74) Vertreter: KASTEL Patentanwälte PartG mbB

(57) **Zusammenfassung**

Mit den hierin beschriebenen Maßnahmen kann der Funktionsumfang von NoCs (22) erweitert werden. Insbesondere werden eine Methode zur Mehrquellenkommunikation für Triple-Modular-Redundancy (TMR), eine Methode zur verzweigten Kommunikation und eine Methode für virtuelle Busse vorgeschlagen.

## Beschreibung

Die Erfindung betrifft Kommunikationsverfahren in einem Network-on-Chip (NoC). Ferner betrifft die Erfindung ein NoC, ein Computerprogramm sowie ein Datenträgersignal, welche die Kommunikationsverfahren verwirklichen.

NoC sind allgemein bekannt und bezeichnen üblicherweise untereinander verbundene (Unter-)Komponenten innerhalb eines einzelnen Mikrochips. Typischerweise basieren solche NoCs auf Hops, d.h. dass Daten von einem Teilnehmer zum Nächsten übertragen werden, wobei Punkt-zu-Punkt (P2P) oder Punkt-zu-Multipunk (Multicast) Verbindungen bereitgestellt werden.

Falls es unterstützt wird, werden Multicasts dadurch implementiert, dass Nachrichtenrouten durch alle Ziel-Knoten geleitet werden und die Daten an diesen Destinationen abgeladen werden, während sie weiter zu der nächsten Destination geleitet werden. Abhängig von der Art des NoC können Nachrichtenrouten statisch oder dynamisch bestimmt sein und durch den Quell-Knoten oder individuell durch jeden Router (d.h. die Routing-Komponente in der Nähe eines Knotens).

Pakdaman Farhad et al, "Integrated circuit-packet switching NoC with efficient circuit setup mechanism", The Journal of Supercomputing, Springer US, Bd. 71, Nr. 8, 23. November 2014, Seiten 2787-2807, XP035518460, ISSN: 0920-8542, DOI: 10.1007/S11227-014-1337-0 betrifft die Reduzierung der NoC-Leistung ist für die Skalierung der Anzahl von Knoten in zukünftigen Multi-Core-Systemen. Die meisten NoC-Designs verwenden Paketvermittlungssysteme, um von ihrem hohen Durchsatz und ihrer hervorragenden Skalierbarkeit zu profitieren. Diese Vorteile werden jedoch mit dem Stromverbrauch und den Latenzzeiten der Router erkauft. Circuit-Switching hingegen reduziert den Stromverbrauch und die Latenzzeit der Kommunikation erheblich, indem es die Daten über zuvor eingerichtete Schaltkreise leitet. Die Hauptprobleme der Leitungsvermittlung, nämlich der Zeitaufwand für die Einrichtung der Leitungen, werden durch einen effizienten und schnellen Algorithmus auf der Grundlage des Zeitmultiplexverfahrens gelöst. Die Evaluierungsergebnisse zeigen eine beträchtliche Reduzierung des NoC-Stromverbrauchs und der Paketlatenzzeit.

Es ist die Aufgabe der Erfindung, NoCs zu verbessern, insbesondere hinsichtlich ihres Funktionsumfangs.

Die Aufgabe wird durch den Gegenstand der unabhängigen Ansprüche gelöst. Bevorzugte Weiterbildungen sind Gegenstand der abhängigen Ansprüche.

Die Erfindung schafft ein Verfahren zur Multi-Quellen-Kommunikation in einem statisch gerouteten und zeitsensitiven NoC, das eine Mehrzahl von Routerknoten aufweist, die untereinander verbunden sind, so dass es den Routerknoten ermöglicht ist, untereinander Nachrichten auszutauschen, wobei das Verfahren umfasst:
a) Senden jeweils von wenigstens zwei identischen Nachrichten, die zumindest Flusskontrolldaten, Nutzdaten und Prüfdaten enthalten, durch wenigstens zwei verschiedene Quellenknoten an wenigstens einen vorbestimmten Empfangsknoten derart, dass die Nachrichten den Empfangsknoten zu einer vorbestimmten Zeit gemeinsam erreichen;
b) Kombinieren der von dem Empfangsknoten empfangenen Nachrichten durch den Empfangsknoten in eine kombinierte Nachricht, die Flusskontrolldaten, Nutzdaten und Prüfdaten enthält, durch den Empfangsknoten oder Vergleichen der von dem Empfangsknoten empfangenen Nachrichten durch den Empfangsknoten; und
c) Weiterverarbeiten der kombinierten Nachricht durch den Empfangsknoten oder Weiterverarbeiten wenigstens einer der von dem Empfangsknoten empfangenen Nachrichten anhand des Ergebnisses des Vergleichs aus Schritt b).

Es ist bevorzugt, dass in den Schritten b) und c) der Empfangsknoten einen Zwischenknoten umfasst, der gemäß den Flusskontrolldaten entlang einer Route zu einem Zielknoten, an den die Nachrichten gemäß der Flusskontrolldaten gerichtet sind, angeordnet ist.

Es ist bevorzugt, dass in den Schritten b) und c) der Empfangsknoten ein Zwischenknoten ist.

Es ist bevorzugt, dass in Schritt c) das Weiterverarbeiten in dem Zwischenknoten dadurch erfolgt, dass die in Schritt b) erzeugte kombinierte Nachricht an ein nächstes Routensegment der Route zu dem Zielknoten weitergesendet wird.

Es ist bevorzugt, dass in den Schritten b) und c) der Empfangsknoten einen Ziel-knoten umfasst, an den die Nachrichten gemäß den Flusskontrolldaten gerichtet sind.

Es ist bevorzugt, dass in den Schritten b) und c) der Empfangsknoten ein Zielknoten ist.

Es ist bevorzugt, dass das Weiterverarbeiten in dem Zielknoten dadurch erfolgt, dass die in Schritt c) erzeugte kombinierte Nachricht anhand der Prüfdaten validiert wird, um eine geprüfte Nachricht zu erhalten.

Es ist bevorzugt, dass das Weiterverarbeiten in dem Zielknoten dadurch erfolgt, dass, wenn der Vergleich in Schritt b) ergibt, dass die Nachrichten übereinstimmen, die Nutzdaten durch den Zielknoten weiterverarbeitet werden, vorzugsweise an eine an den Zielknoten angeschlossene Funktionskomponente übergeben werden.

Es ist bevorzugt, dass in Schritt c) die Validierung als erfolgreich gilt, wenn ein Ergebnis eines auf die kombinierte Nachricht angewandten Prüfalgorithmus mit den Prüfdaten übereinstimmt, andernfalls gilt die Validierung als erfolglos.

Vorzugsweise umfasst das Verfahren einen Schritt d) in welchem der Empfangsknoten, vorzugsweise der Zielknoten, die geprüfte Nachricht weiterverarbeitet, falls in Schritt c) die Validierung anhand der Prüfdaten erfolgreich war, oder, falls in Schritt c) die Validierung anhand der Prüfdaten erfolglos war, die geprüfte Nachricht verwirft.

Es ist bevorzugt, dass in Schritt b) die empfangenen Nachrichten durch eine bitweise Operation, vorzugsweise eine bitweise OR-Operation oder eine bitweise AND-Operation, zu der kombinierten Nachricht kombiniert werden.

Es ist bevorzugt, dass in Schritt a) durch wenigstens drei verschiedene Quellen-knoten jeweils wenigstens zwei identische Nachrichten entlang gegebenenfalls unterschiedlicher Routen gesendet werden, wobei die von unterschiedlichen Quellenknoten gesendeten Nachrichten jeweils paarweise identisch sind.

Es ist bevorzugt, dass in Schritt b) die von dem Empfangsknoten empfangenen Nachrichten durch den Empfangsknoten jeweils paarweise kombiniert werden, um wenigstens drei kombinierte Nachrichten zu erhalten.

Es ist bevorzugt, dass in Schritt a) durch N verschiedene Quellenknoten jeweils (N-1) identische Nachrichten entlang gegebenenfalls unterschiedlicher Routen gesendet werden, wobei die von unterschiedlichen Quellenknoten gesendete Nachrichten jeweils paarweise identisch sind, wobei N die Anzahl der Quellenknoten ist.

Es ist bevorzugt, dass in Schritt b) die von dem Empfangsknoten empfangenen Nachrichten durch den Empfangsknoten jeweils paarweise kombiniert werden, um N kombinierte Nachrichten zu erhalten.

Es ist bevorzugt, dass in Schritt c) die kombinierten Nachrichten dadurch validiert werden, dass der Empfangsknoten die kombinierten Nachrichten jeweils paarweise miteinander vergleicht, wobei die Validierung als erfolgreich gilt, wenn der Vergleich ergibt, dass eine Mehrheit der kombinierten Nachrichten identisch ist, andernfalls gilt die Validierung als erfolglos.

Es ist bevorzugt, dass in Schritt c) das Weiterverarbeiten, vorzugsweise die Validierung, als Hardwarefunktionalität in dem Empfangsknoten implementiert ist.

Es ist bevorzugt, dass in Schritt c) das Validieren als erfolgreich festgestellt wird, wenn lediglich eine erste empfangene kombinierte Nachricht erfolgreich validiert wurde.

Es ist bevorzugt, dass der Routerknoten, der Empfangsknoten, der Quellenknoten, der Zielknoten und/oder der Zwischenknoten eine Funktionskomponente umfasst, die zum Verarbeiten der Nachricht, vorzugsweise der Nutzdaten und der Prüfdaten, ausgebildet ist.

Die Erfindung schafft ein Verfahren zur verzweigten Kommunikation in einem statisch gerouteten und zeitsensitiven NoC, das eine Mehrzahl von Routerknoten aufweist, die untereinander verbunden sind, so dass es den Routerknoten ermöglicht ist, untereinander Nachrichten auszutauschen, wobei das Verfahren umfasst:
a) Senden einer Nachricht, die Flusskontrolldaten und Nutzdaten enthält, durch einen Quellenknoten an einen Routerknoten, wobei die Flusskontrolldaten wenigstens ein Flit mit wenigstens einem Hop enthalten, die eine Hauptroute zu einem Hauptzielknoten und wenigstens eine Zweigroute zu einem Zweigzielknoten definieren;
b) Empfangen der Nachricht durch den Routerknoten;
c) Ändern der in Schritt b) empfangenen Flusskontrolldaten durch den Routerknoten um geänderte Flusskontrolldaten zu erhalten, indem, um geänderte Flusskontrolldaten für die Hauptroute zu erhalten, aus dem aktuellen Flit der aktuelle Hop entfernt wird und, wenn der aktuelle Hop einen Branch-Marker enthält, alle dem Branch-Marker zugeordneten Hops aus den empfangenen Flusskontrolldaten entfernt werden, und indem, um geänderte Flusskontrolldaten für die Zweigroute zu erhalten, alle dem Branch-Marker zugeordneten Hops in die Flusskontrolldaten für die Zweigroute eingetragen werden; und
d) Weiterleiten der Nachricht, welche die in Schritt c) geänderten Flusskontrolldaten enthält, entsprechend den in Schritt b) empfangenen Flusskontrolldaten, wobei die Nachricht entlang der Hauptroute mit den in Schritt c) erhaltenen Flusskontrolldaten für die Hauptroute weitergeleitet wird und wobei die Nachricht entlang der Zweigroute mit Flusskontrolldaten für die Zweigroute weitergeleitet wird.

Es ist bevorzugt, dass in Schritt d) das Weiterleiten der Nachricht entlang der Zweigroute nach einer Abzweigung von der Hauptroute dadurch erfolgt, dass der aktuelle Hop der Zweigroute entfernt wird und die Nachricht mit den so veränderten Flusskontrolldaten an den nächsten Knoten entlang der Zweigroute weitergeleitet wird.

Die Erfindung schafft ein Verfahren zum Betreiben eines virtuellen Bussystems in einem statisch gerouteten und zeitsensitiven NoC, das eine Mehrzahl von Routerknoten aufweist, die untereinander verbunden sind, so dass es den Routerknoten ermöglicht ist, untereinander Nachrichten auszutauschen, wobei das Verfahren umfasst:
a) in dem NoC, definieren von individuellen Zeitslots für jeden Quellenknoten derart, dass die Zeitslots relativ zueinander um eine Anzahl von Taktzyklen zeitverschoben sind, die der Anzahl der benötigten Taktzyklen zum Senden der Nachricht von einem ersten zu einem zweiten Quellenknoten entspricht, wobei es jedem Quellenknoten lediglich in seinem entsprechenden Zeitslot ermöglicht ist, Nachrichten zu senden, um einen virtuellen Bus zu schaffen;
b) Senden einer Nachricht durch einen der Quellenknoten an den Zielknoten lediglich dann, wenn zu dem Zeitslot für diesen Quellenknoten keine Nachricht eines anderen Quellenknotens diesen Quellenknoten passiert.

Es ist bevorzugt, dass jeder Quellenknoten ein Flag aufweist, das angibt, dass es dem jeweiligen Quellenknoten ermöglicht ist, eine Nachricht zu senden.

Es ist bevorzugt, dass nach dem Senden der Nachricht durch den Quellenknoten dessen Flag gelöscht wird.

Es ist bevorzugt, dass der Zielknoten eine Magic-Message an die Quellenknoten aussendet, wenn der Zielknoten, vorzugsweise für eine vorbestimmte Zeit, keine Nachricht erhalten hat, wobei die Magic-Message jeden Quellenknoten veranlasst, dessen gelöschtes Flag wieder zu setzen.

Es ist bevorzugt, dass in Schritt a) die Zeitslots derart definiert werden, dass ein Quellenknoten einer Mehrzahl von virtuellen Bussen zugeordnet wird, wobei die virtuellen Busse in einem Interleave-Modus betrieben werden.

Die Erfindung schafft ein NoC, das eine Mehrzahl von Routerknoten aufweist, die untereinander verbunden sind, so dass es den Routerknoten ermöglicht ist, untereinander Nachrichten auszutauschen, wobei das NoC konfiguriert ist, gemäß einem bevorzugten Verfahren zu operieren.

Die Erfindung schafft ein Computerprogramm umfassend Befehle, die bei der Ausführung der Befehle durch das bevorzugte NoC dieses veranlassen, eines der bevorzugten Verfahren auszuführen.

Die Erfindung schafft ein Datenträgersignal, das das bevorzugte Computerprogramm überträgt.

Die Erfindung schafft eine Flusskontrolldatenstruktur für Flusskontrolldaten zur Verwendung in einem NoC, wobei die Flusskontrolldaten ein Flit mit einem Hop aufweisen, wobei der Hop eine Hauptroutenangabe und einen Branch-Marker mit jeweils zugeordneten Hops aufweist, wobei die die Hauptroutenangabe einen Routerknoten veranlasst, eine Nachricht an den nächsten Hop entlang einer Hauptroute weiterzuleiten, und wobei der Branch-Marker einen Routerknoten veranlasst, die Nachricht an den nächsten Hop entlang einer von der Hauptroute abgezweigten Zweigroute weiterzuleiten.

Eine Idee ist es, den NoC-Funktionsumfang durch eine Multiquellen-Kommunikation zu verbessern.

Die hierin beschriebene Multiquellen-Kommunikation ermöglicht das Senden derselben Nachricht von wenigstens zwei Quellen zu wenigstens einer Destination. Die Datenübertragung beinhaltet das Kombinieren bzw. Mixen der (beiden) Nachrichten und einen Validitäts- bzw. Konsistenzcheck an dem Zielknoten. Ein "strictly timed network scheduling" ermöglicht es, dass die Quellen die Nachrichten zu einem Zeitpunkt und mit einer Route versenden, sodass die mehreren Nachrichten zu einem vorbestimmten Zeitpunkt an einem vorbestimmten Router eintreffen.

Der Router kombiniert diese Nachrichten in eine einzige Nachricht, die an ein gemeinsames nachfolgendes Routensegment (d.h. denselben Ausgang des Routers) weitergesendet werden. Die Kombination der Nachrichten kann beispielsweise durch eine bitweise ODER-Operation (UND-Operation ist ebenfalls möglich) erfolgen und enthält die Nachrichten-Header, die Nutzdaten und die angehängte Prüfsumme. Die Korrektheit der kombinierten Nachricht wird von den Empfängern durch Auswerten der Prüfsumme geprüft.

Ein Zweck der Multiquellen-Technik ist es, den Footprint einer redundanten Nachrichtenerzeugung und -prüfung zu verringern, wie sie beispielsweise von sicherheitskritischen Systemen verwendet werden. Dreifach modulare Redundanz (engl. triple-modular-redundancy, TMR) kann mittels drei Sendern verwirklicht werden, die jeweils zwei Nachrichten aussenden, die wiederum in drei Nachrichten kombiniert werden. Wenn die Prüfsummenprüfung als automatische Hardwarefunktionalität verwirklicht ist, braucht der Empfangsknoten lediglich die erste korrekt empfangene Nachricht zu verwenden, da dies bereits indiziert, dass die beiden entsprechenden Sender dieselbe Nachricht erzeugt hatten.

Wenn andererseits drei unabhängige Nachrichten zu dem Empfängerknoten (d.h. ohne Multiquellen-Funktionalität), kann der Empfängerknoten die drei Nachrichten explizit vergleichen, um zu identifizieren, welche davon identisch sind, um eine Standard-Voting durchzuführen.

Optional ist es auch möglich, TMR-Voter direkt in alle oder ausgewählte RouterKnoten zu integrieren. Das TMR-Voting kann nach der gut bekannten 2-von-3-Methode ausgeführt sein, um die drei Nachrichten in eine einzige Nachricht zu kombinieren. Somit erhalten der/die Empfänger lediglich eine Nachricht.

Eine weitere Idee ist es, die Funktionalität hinsichtlich verzweigter Kommunikation zu verbessern.

Ein NoC kann ein Routing verwenden, bei dem die eigentliche Route einer Nachricht in dem Nachrichtenheader gespeichert ist. In diesem Fall enthält der Header Informationen über alle Hops, d.h. welcher Weg (N, O, S, W, lokaler Port) an dem nächsten Router genommen wird. Typischerweise wird diese Information in einer Queue bereitgestellt, aus der das erste Element während eines Hops entfernt wird. Entsprechend ist nunmehr das nächste Element die für den nächsten Hop relevante Information. Das letzte Element dieser Queue enthält einen Marker, der das letzte Element als dieses identifiziert.

Wenn unterstützt, werden Multicasts typischerweise dadurch implementiert, dass eine Nachrichtenroute sequenziell durch alle Ziele hindurchverläuft und die Nachricht an den lokalen Port von mehreren Routern geliefert wird.

Es wird eine Methode vorgeschlagen, die zusätzlich Seitwärtsverzweigungen von der Hauptnachrichtenroute ermöglicht. Dieser Ansatz kann durch Hops verwirklicht werden, die einen "Branch"-Marker zusammen mit Informationen darüber enthalten, wie viele Hops für den Seitenzweig relevant sind. Die relevanten Hop-Daten werden in den Zweig geforwarded (und aus der Haupt-Queue entfernt) während diejenigen Hops, die den Zweig-Hops nachfolgen weiter die Hauptroute beschreiben.

Eine Implementierung kann auf einer Routing-Queue basiert sein, die mehreren Netzwerk-Flits (kleine Datenbereiche, die durch das NoC in einem Zeitschritt übertragen werden) gespeichert ist. Ein solcher Flit kann *f* Hops und N Flits enthalten, welche die komplette Route einschließlich Zweigen beschreiben. Wenn ein Hop b einen Zweig markiert, beschreiben die verbleibenden Hops in dem Flit den Zweig und der besagte Flit wird nur zu diesem Zweig geforwarded. Das Ende der (Zweig-)Route wird in dem speziellen Flit angezeigt werden, d.h. die Länge des Zweigs ist durch *f* limitiert und weitere Unterzweige sind in dieser Implementierung nicht möglich.

Das weitere Routing der Hauptroute wird mit dem nachfolgenden Flit fortgesetzt, der in beide Richtungen, Zweit und Hauptroute, (wie auch der Rest der Nachricht) gesendet wird. Weitere Zweige von der Hauptroute können auf die gleiche Art implementiert werden. Wie in der nachfolgenden Tabelle gezeigt, kann ein Hauptsegment die Hops 1 bis 5, einen Zweig mit drei Hops 6a bis 8a, ein nachfolgendes Hauptsegment mit einem Hop 6m, einen weiteren Zweig mit Hops 7b und 8b sowie die Fortsetzung der Hauptroute mit den Hops 7m bis 11m aufweisen.

| **Head Flit** | | | | | |
|---|---|---|---|---|---|
| Hop 1 | Hop 2 | Hop 3 | Hop 4 | Hop 5 | *nextflit* |
| *Branch 1* | Hop 6a | Hop 7a | Hop 8a | *end* | |
| Hop 6m | *Branch 2* | Hop 7b | Hop 8b | *end* | |
| Hop 7m | Hop 8m | Hop 9m | Hop 10m | Hop 11m | *end* |

| **Data Flits** | | | | | |
|---|---|---|---|---|---|
| Lorem ipsum dolor sit amet ... | | | | | |
| consectetur adipiscing elit, sed do eiusmod tempor ... | | | | | |

Noch eine Idee ist es, einen virtuellen Bus einzurichten.

Statisch geroutete/geschedulete Netzwerke sind charakteristisch dahingehend, dass Nachrichten nicht zum frühestmöglichen Zeitpunkt übertragen werden können, sondern auf den entsprechenden Zeit-Slot warten müssen. Dies kann den Durchsatz von Anwendungen, die beste Performance benötigen verringern (im Unterschied zu zeitkritischen Anwendungen, für die die zeitlich korrekte Ausführung die erste Priorität ist). Um eine derartige Best-Effort-Kommunikation/Anwendung auf einem NoC mit statisch gescheduletem Routing zu ermöglichen, können virtuelle Busse verwendet werden.

Diese virtuellen Busse können periodisch geschedulete Kommunikationsslots von mehreren Quellen zu einem oder mehreren Zielen bereitstellen. Je kürzer die Schedulingperiode ist, desto höher ist der Durchsatz und desto höher ist der Einfluss auf anderen Traffic (e.g. kritischen Traffic). Eine geeignete Schedulingperiode kann entsprechende der Anzahl an Quellenknoten und deren Traffic-Erfordernissen bestimmt werden. Eine Analyse der Nodes (d.h. der dort ausgeführten Anwendungen) kann beim Identifizieren des Durchsatzes/der Schedulinganforderungen behilflich sein. Der virtuelle Bus kann mehrere Quellen beispielsweise mit einem externen Speicher verbinden.

Ein virtueller Bus kann durch individuelle Senden-Operationen der Quellen definiert sein, die um eine Anzahl von Clock-Zyklen verschoben sind, welche eine Nachricht von dem ersten Knoten zu dem zweiten Knoten, von dem zweiten Knoten zu dem dritten Knoten, und so weiter, benötigt. Wenn ein Knoten eine Nachricht an den virtuellen Bus senden möchte, prüft der Knoten den Router entsprechend einer eingehenden Nachricht (von dem entsprechenden Eingangsport) oder dem entsprechenden Ausgangsport. Das bedeutet, dass eine Quelle prüft, ob eine Nachricht zu der bestimmten Sendezeit passiert, beispielsweise von Nord nach Süd. Wenn keine Nachricht vorhanden ist, kann die jeweilige Quelle ihre Nachricht senden. Da der Zeitslot für die vorhergehende Quelle bereits verstrichen ist, kann diese keine Nachricht mehr während des Zeitslots versenden, sodass eine Kollision vermieden werden kann.

Wird dieses Schema verwendet, ist eine prioritätsbasierte Arbitration des virtuellen Busses enthalten: der am weitesten von dem Zielknoten entfernte Quellenknoten hat höchste Priorität, der dem Zielknoten nächste Quellenknoten hat die niedrigste Priorität.

Mit zusätzlicher Funktionalität in den Quell- und Ziel-Routerknoten ist es auch möglich, eine Round-Robin-Arbitration zu implementieren: Alle Quellen halten ein Flag, das ihnen erlaubt, eine Nachricht zu senden, wenn ihnen der virtuelle Bus zur Verfügung steht (wie zuvor erläutert). Wenn eine Quelle ihre Nachricht gesendet hat (falls diese eine Nachricht senden möchte) wird das Flag gelöscht, d.h. die Quelle kann keine Nachricht mehr senden. Der Zielknoten beobachtet den virtuellen Bus und im Fall, dass keine Nachricht empfangen worden ist, sendet der Ziel-knoten eine "Magic"-Nachricht in einem gesonderten Routing-Slot an alle Quellen. Diese Nachricht lässt die Quellen wieder die Flags setzen, sodass wieder Nachrichten gesendet werden können. In den meisten Fällen ist der gesonderte Slot für die Kommunikation von dem ursprünglichen Ziel zu den ursprünglichen Quellen ohnehin verfügbar, um eine Antwort an die Anfrager zu senden.

Ein drittes Arbitrations-Schema, "Time Division Multiple Access" (TMDA), kann ohne virtuelle Busse implementiert werden, indem getrennte Slots für jede Quelle zu dem Ziel bereitgestellt werden.

Kombinationen des Zugangsschemas oder Kombinationen derselben Policy mit unterschiedlichen Parametern sind möglich, indem eine Mehrzahl von virtuellen Bussen mit einem Interleave gescheduled werden. Beispielsweise kann ein Szenario mit den Quellen A, B und C, die auf einen Speicher zugreifen sollen, verwirklicht werden, in welchem A und B einen höheren Durchsatz benötigen als C, indem zwei interleaved virtuelle Busse eingesetzt werden. Der erste befasst sich mit A, B und C und der zweite lediglich mit A und B. Im Schnitt erhalten somit A und B etwa die doppelte Bandbreite im Vergleich zu C.

Falls eine minimale Bandbreite bereitgestellt werden soll, zum Beispiel für A und B, kann die Round-Robin-Policy auf den A-B-Bus angewendet werden, während die prioritätsbasierte Policy auf den A-B-C-Bus angewandt wird. Somit können A und B einen Minimalanteil von jeweils 25% bekommen während die restlichen 50 % auf Prioritätsbasis allen drei Quellen zur Verfügung stehen. Weitere Feineinstellungen können durch andere Arten virtueller Busse erreicht werden.

Ausführungsbeispiele werden im Folgenden anhand der beigefügten schematischen Zeichnungen näher erläutert. Darin zeigt:
- Fig. 1: ein Beispiel für einen Mikrochip mit einem NoC;
- Fig. 2: ein Beispiel für ein NoC im Betrieb mit Multiquellen-Kommunikation;
- Fig. 3: ein Beispiel für ein NoC im Betrieb mit Zweigkommunikation; und
- Fig. 4: ein Beispiel für ein NoC im Betrieb mit einem virtuellen Bus.

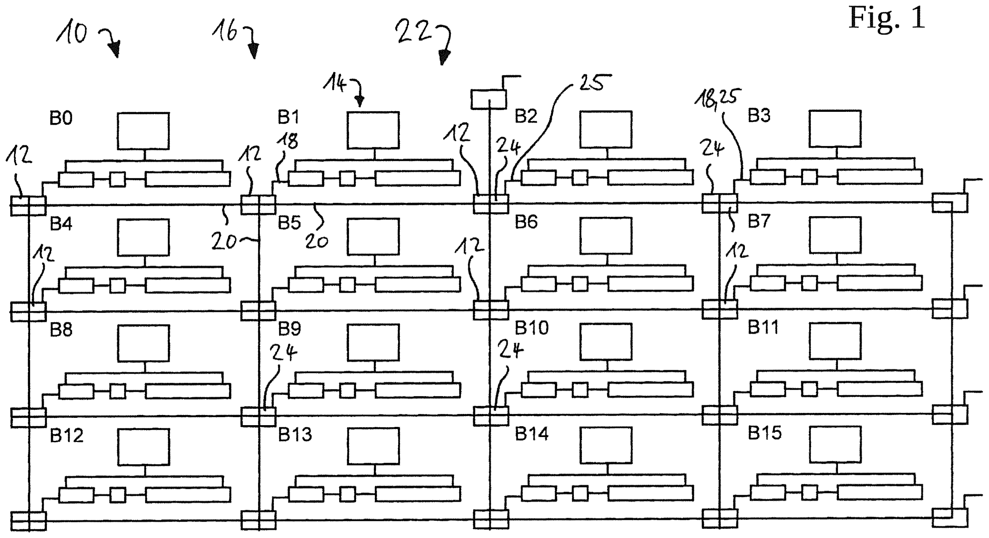

Es wird nachfolgend auf Fig. 1 Bezug genommen, die schematisch einen Mikrochip 10 zeigt. Der Mikrochip 10 weist eine Mehrzahl von Funktionseinheiten B0, ..., B15 auf. Jede Funktionseinheit B0, ..., B15, umfasst eine Routerkomponente 12 und eine Funktionskomponente 14. Wie in Fig. 1 angedeutet können mehrere Funktionskomponenten 14, hier beispielsweise sechzehn Funktionskomponenten 14, zu einem Funktionsblock 16 zusammengefasst werden. Der Mikrochip 10 kann mehrere dieser Funktionsblöcke 16 haben.

Die Routerkomponenten 12 können Nachrichten empfangen und senden. Die Routerkomponenten 12 sind untereinander verbunden. Die Routerkomponenten 12 sind ferner eingerichtet, Nachrichten, die für die an die Routerkomponente 14 angeschlossene Funktionskomponente 14 bestimmt sind an diese zur weiteren Verarbeitung weiterzureichen.

Die Routerkomponenten 12 haben wenigstens zwei Anschlüsse, einen Komponentenanschluss 18 und einen oder mehrere Routinganschlüsse 20. Der Komponentenanschluss 18 ist mit der Funktionskomponente 14 verbunden. Jeder Routinganschluss 20 ist mit einem Routinganschluss 20 einer anderen Routingkomponente 12 verbunden.

Der Mikrochip 10 ist ferner so gestaltet, dass er ein NoC 22 enthält, durch das die Funktionseinheiten B0, ..., B15 mittels ihrer Routerkomponenten 12 untereinander kommunizieren können. Das NoC 22 ist als statisch geroutetes, zeitsensitives Netzwerk konfiguriert (engl. "statically routed time-sensitive network", hierin auch kurz als TSN bezeichnet).

Jede Routerkomponente 12 bildet einen Routerknoten 24 des NoC 22. Jeder Komponentenanschluss 18 bildet einen lokalen Port 25. Jeder Routinganschluss 20 kann auch mit einer Himmelsrichtung (N, E, S, W) bezeichnet werden, die angibt in welcher Richtung er mit einem weiteren Routerknoten 24 verbunden ist.

So bezeichnet beispielsweise "N" einen Routinganschluss 20, der mit einem Routerknoten 24 nach oben in Fig. 1 verbunden ist. Entsprechend bezeichnen "E", "S" und "W" die Richtungen nach rechts, unten und links. Es sollte beachtet werden, dass die Himmelsrichtungen, wie sie hierin verwendet werden, lediglich illustrativen Zwecken dienen und Angaben darüber vereinfachen sollen, in welche Richtungen Nachrichten, Daten und dergleichen gesendet oder weitergeleitet werden.

Wenn nicht anders angegeben, sind der Mikrochip 10 und das NoC 22 unabhängig von den nachfolgend beschriebenen Betriebs-/Kommunikationsarten wie soeben erläutert ausgebildet.

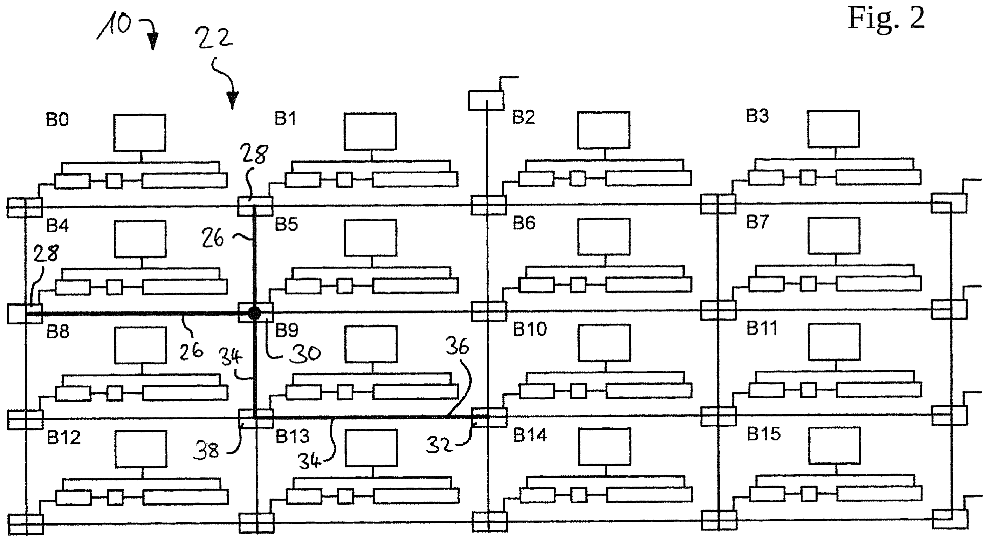

Mit Bezug auf Fig. 2 wird erläutert, wie in dem NoC 22 eine Multiquellen-Kommunikation verwirklicht werden kann.

Bei der Multiquellen-Kommunikation werden identische Nachrichten 26 von wenigstens zwei Quellenknoten 28 über einen Zwischenknoten 30 an einen Zielknoten 32 gesendet. Jede Nachricht 26 enthält Flusskontrolldaten, Nutzdaten und eine Prüfsumme. Die identischen Nachrichten 26 werden unter Verwendung der Eigenschaften des NoC 22 von jedem Quellen-Knoten 28 derart ausgesendet, dass die Nachrichten 26 zum gleichen vorbestimmten Zeitpunkt an dem vorbestimmten Zwischenknoten 30 eintreffen.

Der Zwischenknoten 30 kombiniert die beiden Nachrichten 26 mittels einer bitweisen OR-Operation oder einer bitweisen AND-Operation in eine kombinierte Nachricht 34. Der Zwischenknoten 30 sendet die kombinierte Nachricht 34 über ein nächstes Routensegment 36 ggfs. über weitere Zwischenknoten 38 zu dem Ziel-knoten 32. Die weiteren Zwischenknoten 38 leiten die kombinierte Nachricht 34 lediglich weiter und führen keine Operation auf der Nachricht aus.

Der Zielknoten 32 empfängt die kombinierte Nachricht 34 und die Funktionskomponente 14 prüft diese anhand der Prüfsumme. Ist die Validierung anhand der Prüfsumme erfolgreich, so werden zumindest die Nutzdaten von der Funktionskomponente 14 weiter verarbeitet. Falls die Validierung anhand der Prüfsumme fehlschlägt, wird die Nachricht 34 verworfen. Der Fehlschlag kann über einen Rückkanal an die Quellenknoten 28 übermittelt werden.

In einer Variante können wenigstens drei Quellenknoten 28 jeweils wenigstens zwei identische Nachrichten 26 aussenden, die paarweise in einem Zwischenknoten 38 in insgesamt wenigstens drei kombinierte Nachrichten 34 kombiniert werden. Die kombinierten Nachrichten 34 werden sodann gegebenenfalls über unterschiedliche Routen zu dem Zielknoten 32 gesendet. Die Funktionskomponente 14 prüft wiederum die erste Nachricht anhand der Prüfsumme. Wenn die Validierung einer der drei kombinierten Nachrichten 34 erfolgreich war, dann war die Validierung insgesamt erfolgreich, weil dies angibt, dass zwei unabhängige Quellenknoten 28 dieselben Nachrichten 26 ausgesandt haben.

In einer weiteren Variante können drei Quellenknoten 28 identische Nachrichten 26 an den Zielknoten 32 senden. Die Nachrichten 26 werden in dem Zielknoten 32 miteinander verglichen, wobei die Validierung als erfolgreich gilt, wenn zwei von drei Nachrichten übereinstimmen.

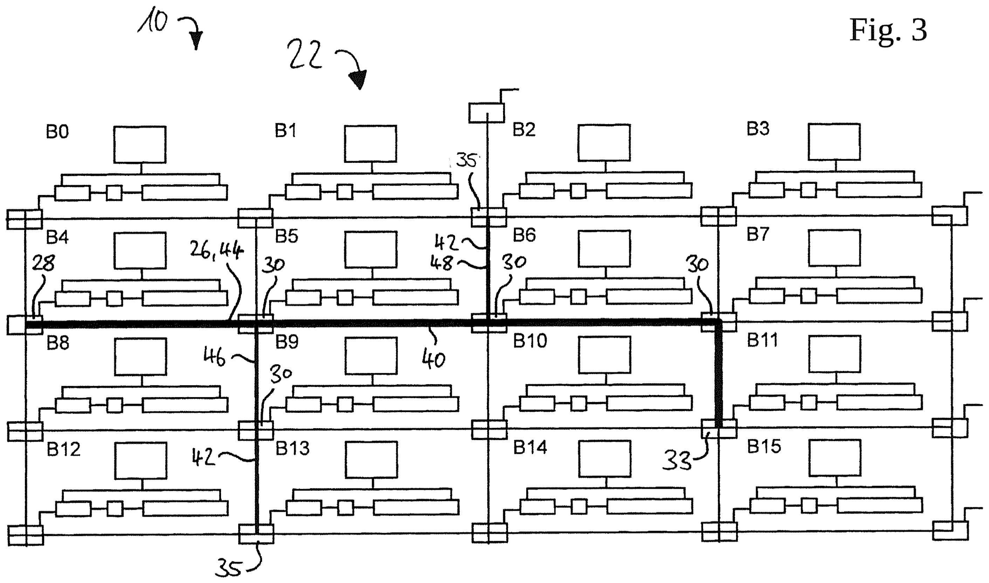

Mit Bezug auf Fig. 3 wird erläutert, wie in dem NoC 22 eine Zweigkommunikation verwirklicht werden kann.

Der Quellenknoten 28 soll eine Nachricht 26 an mehrere Zielknoten 32 versenden. Der Quellenknoten 28 und einer der Zielknoten 32 sind durch eine Hauptroute 40 verbunden. Dieser Zielknoten 32 wird auch Hauptzielknoten 33 genannt. Die übrigen Zielknoten 32 sind durch Zweigrouten 42 mit dem Quellenknoten 28 verbunden sind. Diese Zielknoten 32 werden auch Zweigzielknoten 35 genannt.

Die Nachricht 26 enthält Flusskontrolldaten 44, in denen die Hauptroute 40 und die Zweigrouten 42 definiert sind. Die Flusskontrolldaten 44, welche angeben an welche der Knoten 30, 32 die Nachricht 26 als nächstes übertragen werden, werden bei jedem Hop wie folgt geändert:
Der aktuelle Hop wird aus den Flusskontrolldaten 44 entfernt. Wenn ein Branch-Marker vorhanden ist, der angibt, dass die eine Zweigroute 42 von der Hauptroute 40 abzweigen soll, werden alle Hops der Zweigroute 42 aus den Flusskontrolldaten 44 für die Hauptroute 40 entfernt. Die Nachricht 26 wird entlang der Hauptroute 40 mit geänderte Flusskontrolldaten 44 gesendet und entlang der Zweigroute 42 mit Flusskontrolldaten 44 für die Zweigroute 42.

Die Flusskontrolldaten 44 umfassen einen Flit mit vier Hops, wie nachfolgend dargestellt. An Hop 1 und Hop 2 gibt es jeweils eine Abzweigung von der Hauptroute

| **Head Flit** | | | | |
|---|---|---|---|---|
| Hop 1 | Hop 2 | Hop 3 | Hop 4 | *nextflit* |
| *Branch 1* | S | S | *end* | |
| E | *Branch 2* | N | *end* | |
| E | E | S | *end* | |

Der Quellenknoten 28 (B4) sendet die Nachricht 26 zunächst in Richtung E aus. Der Zwischenknoten 30 (B5) empfängt die Nachricht 26 und verteilt die Nachricht 26 anhand der Flusskontrolldaten 44 weiter. An Hop 1 ist eine Abzweigung in einen ersten Zweig 46 und eine Weiterleitung in Richtung E vorgesehen.

Der Zwischenknoten 30 (B5) sendet die Nachricht 26 mit den folgenden Flusskontrolldaten 44 an in Richtung E entlang der Hauptroute 40 an den Zwischenknoten 30 (B6) weiter:

| **Head Flit** | | | | |
|---|---|---|---|---|
| | Hop 2 | Hop 3 | Hop 4 | *nextflit* |
| | *Branch 2* | N | *end* | |
| | E | S | *end* | |

Der Zwischenknoten 30 leitet ferner eine Kopie der Nachricht 26 und folgende Flusskontrolldaten 44 in Richtung S entlang des ersten Zweigs 46 an den Zwischenknoten 30 (B9) weiter:

| **Head Flit** | | | | |
|---|---|---|---|---|
| | | Hop 3 | Hop 4 | *nextflit* |
| | | S | *end* | |

Der Zwischenknoten 30 (B9) leitet schließlich die Nachricht 26 in Richtung S entlang des ersten Zweigs 46 an den Zielknoten 32 (B13) weiter, der sodann die Nachricht über seinen lokalen Port 25 an die Funktionskomponente 14 ausgibt.

Der Zwischenknoten 30 (B6) verfährt entsprechend und sendet die Nachricht 26 sowohl in Richtung E entlang der Hauptroute 40 zu dem Zwischenknoten 30 (B7) mit den folgenden Flusskontrolldaten 44:

| **Head Flit** | | | | |
|---|---|---|---|---|
| | | Hop 3 | Hop 4 | *nextflit* |
| | | S | *end* | |

Der Zwischenknoten 30 (B6) sendet die Nachricht 26 zudem in Richtung N entlang des zweiten Zweigs 48 zu dem Zielknoten 32 (B2) mit folgenden Flusskontrolldaten 44.

| **Head Flit** | | | | |
|---|---|---|---|---|
| | | | Hop 4 | *nextflit* |
| | | | *end* | |

Der Zwischenknoten 30 (B7) leitet die Nachricht 26 schließlich an den Zielknoten 32 (B11) mit folgenden Flusskontrolldaten 44 weiter:

| **Head Flit** | | | | |
|---|---|---|---|---|
| | | | Hop 4 | *nextflit* |
| | | | *end* | |

Somit ist die Nachricht 26 von dem Quellenknoten 28 (B4) an die drei Zielknoten 32 (B6, B11, B13) geroutet worden, indem die Nachricht 26 entlang der Hauptroute 40 von dem Quellenknoten 28 (B4) zu dem Hauptzielknoten 33 (B11) gesandt worden ist, während die Nachricht 26 zudem entlang der Zweige 46, 48 zu den Zweigzielknoten 35 (B6, B13) geroutet worden ist.

Im Unterschied zu herkömmlicher Multicast-Übertragung wird die Nachricht 26 nicht nacheinander durch alle Zielknoten 32 geroutet, sondern ggfs. abzweigend von der Hauptroute 40 direkt zu den Zielknoten 32 geleitet, die jeweils der letzte Knoten der jeweiligen Route sind.

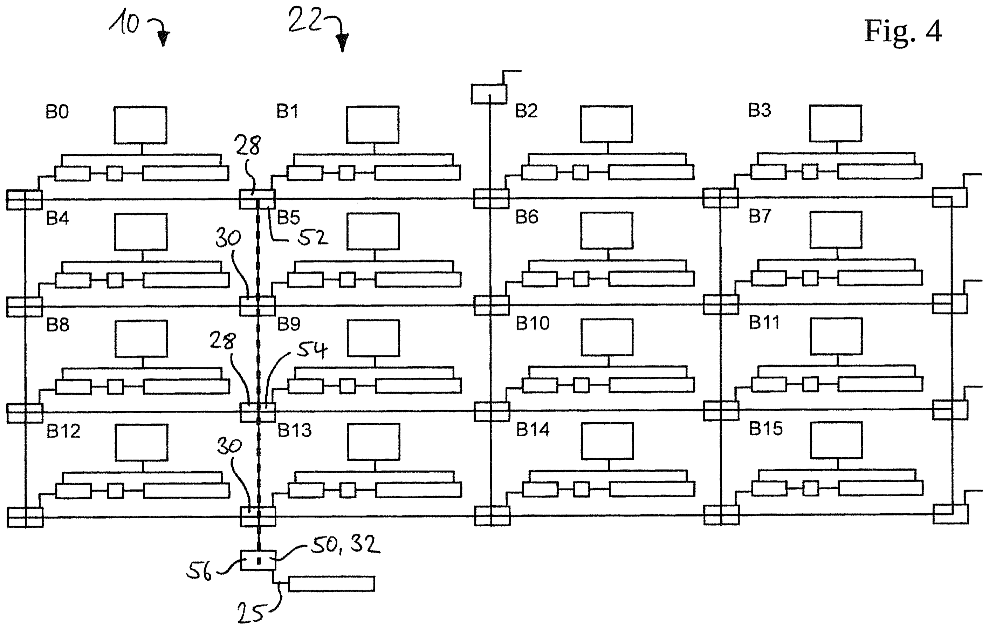

Mit Bezug auf Fig. 4 wird erläutert, wie in dem NoC 22 ein virtueller Bus verwirklicht werden kann. In dieses NoC 22 ist ferner ein Speicherknoten 50 eingebunden. Der Speicherknoten 50 ist daher gleichzeitig Zielknoten 32.

Das NoC 22 ist zeitsensitiv konfiguriert, so dass eine Mehrzahl von vorbestimmten Zeitslots für individuelle Sendeoperationen von Quellenknoten 28 bereitgestellt wird. Die Zeitslots sind relativ zueinander zeitverschoben um eine Anzahl von Taktzyklen des NoC 22, die der Anzahl von Taktzyklen entspricht, welche eine Nachricht 26 von einem ersten Knoten 52 (B1) zu einem zweiten Knoten 54 (B9), von einem zweiten Knoten 54 (B9) zu einem dritten Knoten 56 (B13), und so weiter benötigt.

Im weiteren wird der Einfachheit halber angenommen, dass die Nachricht 26 von einem Knoten zum nächsten Knoten genau einen Taktzyklus benötigt. Es können jedoch auch mehrere Taktzyklen sein.

Die Funktionsweise des virtuellen Busses wird nachfolgend beispielhaft beschrieben anhand von zwei Quellenknoten 28 (B1, B9), welche Daten an den Speicherknoten 50 senden.

Der Quellenknoten 28 (B1) sendet in seinem Zeitslot eine Nachricht in Richtung des Speicherknotens 50 aus. Die Nachricht wird über einen Zwischenknoten 30 (B5) an den Quellenknoten 28 (B9) geleitet. Dieser Quellenknoten 28 (B9) prüft, ob zu seinem Zeitslot die Nachricht des vorigen Quellenknotens 28 (B1) gerade eingeht oder ausgeht. Falls dies nicht der Fall ist, kann der Quellenknoten 28 (B9) seine Nachricht in Richtung Speicherknoten 50 senden. Da der Zeitslot für den anderen Quellenknoten 28 (B1) bereits verstrichen ist, kann dieser nicht senden und eine Kollision der Nachrichten wird vermieden.

Die Nachrichten werden sodann über den Zwischenknoten 30 (B13) an den Ziel-knoten 32 (hier: den Speicherknoten 50) weitergeleitet und von diesem über seinen lokalen Port 25 an den eigentlichen Speicher ausgegeben.

In einer Round-Robin-Variante erhalten die Quellenknoten 28 jeweils einen Flag, der angibt, dass der jeweilige Quellenknoten 28 eine Nachricht senden darf. Wenn ein Quellenknoten 28 eine Nachricht in seinem Zeitslot gesandt hat wird der Flag gelöscht. Der jeweilige Quellenknoten 28 kann dann keine Nachricht mehr senden.

Der Zielknoten 32 sendet eine Magic-Nachricht über eine Rückroute an alle Quellenknoten 28 zurück, wobei die Magic-Nachricht die Quellenknoten 28 veranlasst ihren Flag wieder zu setzen.

In einer Time-Division-Multiple-Access-Variante (TDMA-Variante) werden separate Zeitslots für jeden Quellenknoten 28 zu dem Zielknoten 32 implementiert. Hierfür ist nicht unbedingt ein virtueller Bus erforderlich.

Die zuvor beschriebenen Varianten können auch kombiniert werden, um die zur Verfügung stehende Bandbreite für die Quellenknoten 28 zu regulieren.

Mit den hierin beschriebenen Maßnahmen kann der Funktionsumfang von NoCs (22) erweitert werden. Insbesondere werden eine Methode zur Mehrquellenkommunikation für Triple-Modular-Redundancy (TMR), eine Methode zur verzweigten Kommunikation und eine Methode für virtuelle Busse vorgeschlagen.

### Bezugszeichenliste

- 10: Mikrochip
- 12: Routerkomponente
- 14: Funktionskomponente
- 16: Funktionsblock
- 18: Komponentenanschluss
- 20: Routinganschluss
- 22: NoC (Network-on-Chip)
- 24: Routerknoten
- 25: lokaler Port
- 26: Nachricht
- 28: Quellenknoten
- 30: Zwischenknoten
- 32: Zielknoten
- 33: Hauptzielknoten
- 34: kombinierte Nachricht
- 35: Zweigzielknoten
- 36: Routensegment
- 38: weiterer Zwischenknoten
- 40: Hauptroute
- 42: Zweigroute
- 44: Flusskontrolldaten
- 46: erster Zweig
- 48: zweiter Zweig
- 50: Speicherknoten
- 52: erster Knoten
- 54: zweiter Knoten
- 56: dritter Knoten

- B0, ..., B15: Funktionseinheit

## Patentansprüche

**1.** Verfahren zum Betreiben eines virtuellen Bussystems in einem statisch gerouteten und zeitsensitiven NoC (22), das eine Mehrzahl von Routerknoten (24) aufweist, die untereinander verbunden sind, so dass es den Routerknoten (24) ermöglicht ist, untereinander Nachrichten (26) auszutauschen, wobei das Verfahren umfasst:
a) in dem NoC (22), definieren von individuellen Zeitslots für jeden Quellen-knoten (28) derart, dass die Zeitslots relativ zueinander um eine Anzahl von Taktzyklen zeitverschoben sind, die der Anzahl der benötigten Taktzyklen zum Senden der Nachricht (26) von einem ersten zu einem zweiten Quellenknoten (28) entspricht, wobei es jedem Quellenknoten (28) lediglich in seinem entsprechenden Zeitslot ermöglicht ist, Nachrichten zu senden, um einen virtuellen Bus zu schaffen;
b) Senden einer Nachricht (26) durch einen der Quellenknoten (28) an den Zielknoten (32) lediglich dann, wenn zu dem Zeitslot für diesen Quellenknoten (28) keine Nachricht (26) eines anderen Quellenknotens (28) diesen Quellenknoten (28) passiert.

**2.** Verfahren nach Anspruch 1, **dadurch gekennzeichnet, dass** jeder Quellen-knoten (28) ein Flag aufweist, das angibt, dass es dem jeweiligen Quellenknoten (28) ermöglicht ist, eine Nachricht (26) zu senden, wobei nach dem Senden der Nachricht (26) durch den Quellenknoten (28) dessen Flag gelöscht wird.

**4.** Verfahren nach einem der vorhergehenden Ansprüche, wobei der Zielknoten (32) eine Magic-Message an die Quellenknoten (28) aussendet, wenn der Ziel-knoten (32) für eine vorbestimmte Zeit keine Nachricht (26) erhalten hat.

**5.** Verfahren nach Anspruch 4, wobei die Magic-Message jeden Quellenknoten (28) veranlasst, dessen gelöschtes Flag wieder zu setzen.

**6.** Verfahren nach einem der vorhergehenden Ansprüche, **dadurch gekennzeichnet, dass** in Schritt a) die Zeitslots derart definiert werden, dass ein Quellen-knoten (28) einer Mehrzahl von virtuellen Bussen zugeordnet wird, wobei die virtuellen Busse in einem Interleave-Modus betrieben werden.

**7.** NoC (22), das eine Mehrzahl von Routerknoten (24) aufweist, die untereinander verbunden sind, so dass es den Routerknoten (24) ermöglicht ist, untereinander Nachrichten (26) auszutauschen, wobei das NoC (22) konfiguriert ist, gemäß einem Verfahren nach einem der vorhergehenden Ansprüche zu operieren.

**8.** Computerprogramm umfassend Befehle, die bei der Ausführung der Befehle durch das NoC (22) nach Anspruch 7 dieses veranlassen, eines der Verfahren nach einem der Ansprüche 1 bis 6 auszuführen.

**9.** Datenträgersignal, das das Computerprogramm nach Anspruch 8 überträgt.

**10.** Flusskontrolldatenstruktur für Flusskontrolldaten (44) zur Verwendung in einem NoC (22), wobei die Flusskontrolldaten (44) ein Flit mit einem Hop aufweisen, wobei der Hop eine Hauptroutenangabe und einen Branch-Marker mit jeweils zugeordneten Hops aufweist, wobei die die Hauptroutenangabe einen Routerknoten (24) veranlasst, eine Nachricht (26) an den nächsten Hop entlang einer Hauptroute (40) weiterzuleiten, und wobei der Branch-Marker einen Routerknoten (24) veranlasst, die Nachricht (26) an den nächsten Hop entlang einer von der Hauptroute (40) abgezweigen Zweigroute (42) weiterzuleiten.
